Europäisches Patentamt

European Patent Office

Office européen des brevets

(19)

(11) Veröffentlichungsnummer : **0 426 732 B1**

(12) **EUROPÄISCHE PATENTSCHRIFT**

(45) Veröffentlichungstag der Patentschrift :
30.09.92 Patentblatt 92/40

(51) Int. Cl.⁵ : **B60K 28/16**

(21) Anmeldenummer : **89908694.6**

(22) Anmeldetag : **10.07.89**

(86) Internationale Anmeldenummer :
**PCT/EP89/00799**

(87) Internationale Veröffentlichungsnummer :
**WO 90/00988 08.02.90 Gazette 90/04**

(54) **ANTRIEBSSCHLUPFREGELEINRICHTUNG.**

(30) Priorität : **27.07.88 DE 3825458**

(43) Veröffentlichungstag der Anmeldung :
**15.05.91 Patentblatt 91/20**

(45) Bekanntmachung des Hinweises auf die
Patenterteilung :
**30.09.92 Patentblatt 92/40**

(84) Benannte Vertragsstaaten :
**DE FR GB IT SE**

(56) Entgegenhaltungen :
**EP-A- 0 163 940**
**DE-A- 3 639 406**
**DE-C- 3 644 138**
**US-A- 4 432 430**
**US-A- 4 721 176**

(73) Patentinhaber : **ROBERT BOSCH GMBH**
**Postfach 30 02 20**
**W-7000 Stuttgart 30 (DE)**

(72) Erfinder : **DEMEL, Herbert**
**Malthildenbadstrasse 6**
**W-7107 Bad Wimpfen (DE)**

(74) Vertreter : **Kammer, Arno, Dipl.-Ing.**
**ROBERT BOSCH GmbH, Zentralabteilung**
**Patente, Postfach 30 02 20**
**W-7000 Stuttgart 30 (DE)**

## Beschreibung

Stand der Technik

Es gibt neben Antriebsschlupfregelsystemen die die Räder bremsen und/oder die Drosselklappe zur Motormomentenregelung verstellen auch ASR-Systeme, die lediglich zeitweise die Einspritzung in einen Teil der Motorzylinder und/oder die Zündung für diese unterbrechen und/oder das Kraftstoff/Luftverhältnis verändern und/oder die Zündung in Richtung Spätzündung verstellen, (z-B-US-A 4432 430).

Vorteile der Erfindung

Obwohl diese bekannte Regelungen durchaus positive Regelungsergebnisse hinsichtlich der Fahrzeugstabilität und der Traktion gewährleistet, ist die erfindungsgemäße Überlagerung einer langsamen Drosselklappenregelung, die nur bei lange dauernden Phasen der Zylinderabschaltung wirksam wird, trotzdem vorteilhaft, und zwar deshalb, weil der Komfort verbessert sowie die Abgasnachbehandlungseinrichtungen weniger beansprucht werden. Da nur eine langsame Verstellung benötigt wird, ist der Regelkreis auch kostengünstig. Gegenüber bekannten E-Gas-Systemen kann die Stellzeit um den Faktor 100 und sogar noch mehr verlängert werden. Es könnte hier z.B. ein Vakuumstellglied zum Einsatz kommen.

Man kann den langsamen Drosselklappensteller schließlich auch noch als Fahrgeschwindigkeitsregler nutzen.

Anhand der Zeichnung wird ein Ausführungsbeispiel der Erfindung erläutert.

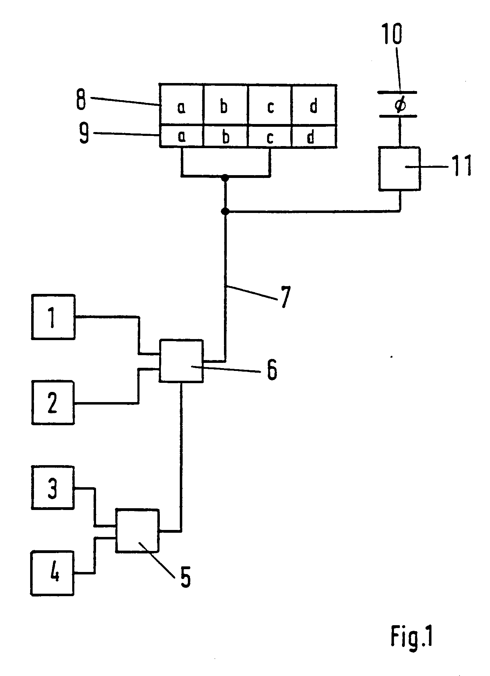

In Fig. 1 sind mit 1 und 2 die Sensoren der angetriebenen und mit 3 und 4 die der nicht angetriebenen Räder eines Fahrzeugs bezeichnet. In einem Block 5 wird die mittlere Geschwindigkeit der nicht angetriebenen Räder 3 und 4 ermittelt die, wie auch die Geschwindigkeiten der angetriebenen Räder 1 und 2, einer Auswerteschaltung 6 zugeführt werden. Wenn eines der Räder Durchdrehneigung zeigt, wird auf einer Leitung 7 ein Signal erzeugt, mit dem eine Antriebsmomentenänderung des Fahrzeugmotors 8 vorgegeben wird. Durch diese Ansteuerung wird z.B. die Ansteuerung der Einspritzventile 9a und 9c der Zylinder 8a und 8c des Motors 8 zeitweise verhindert und damit diese Zylinder von der Erzeugung eines Motormomentes ausgeschlossen so daß das Motormoment reduziert ist.

Das Signal auf Leitung 7 wird auch einem auf die Drosselklappe 10 einwirkenden Stellglied 11 zugeführt, das jedoch sehr träge ausgebildet ist und erst bei längerem Anstehen eines Signals auf Leitung 7 merklich Wirkung zeigt. Damit wird dann langsam auch noch die Füllung der wirksamen Zylinder reduziert.

## Patentansprüche

1.   Antriebsschlupfregeleinrichtung, bei der zur Verringerung des Antriebsschlupfs die Wirksamkeit ein zelner Motorzylinder zeitweise durch Sperrung der Betriebsmittelzufuhr und/oder durch Unterbrechung oder Spätstellung der Zündung und/oder durch Veränderung des Kraftstoff/Luftverhältnisses herabgesetzt wird, dadurch gekennzeichnet, daß dieser Regelung eine Drosselklappenverstellung mit gegenüber der Drosselklappenverstellung bei E-Gas sehr viel langsamerer Verstellgeschwindigkeit überlagert ist.

2.   Antriebsschlupfregeleinrichtung nach Anspruch 1, dadurch gekennzeichnet, daß ein Vakuumstellglied verwendet wird.

3.   Antriebsschlupfregeleinrichtung nach Anspruch 1 oder 2, dadurch gekennzeichnet, daß das Drosselklappenverstellglied auch zur Geschwindigkeitsregelung des Fahrzeugs ausgenutzt wird.

## Claims

1.   Drive slip control system, in which, to reduce the drive slip, the effectiveness of one or more engine cylinders is temporarily reduced by blocking the supply of operating medium and/or by interrupting or retarding the ignition and/or by changing the fuel/air ratio, characterized in that on this control there is superimposed a throttle valve adjustment with a very much slower rate of adjustment in comparison with the throttle valve adjustment with an electronic accelerator.

2.   Drive slip control system according to Claim 1, characterized in that a vacuum actuator is used.

3. Drive slip control system according to Claim 1 or 2, characterized in that the throttle valve adjustor is also used for speed control of the vehicle.

**Revendications**

1) Dispositif de régulation du glissement, dans lequel pour réduire le glissement on diminue l'efficacité des différents cylindres du moteur temporairement en bloquant l'alimentation en carburant et/ou en interrompant ou en retardant l'allumage et/ou en faisant varier le rapport air/carburant, dispositif caractérisé en ce qu'on superpose à cette régulation un déplacement du papillon d'étranglement avec une vitesse de déplacement du papillon d'étranglement dans le cas des gaz E.

2) Dispositif de régulation de glissement selon la revendication 1, caractérisé en ce que l'on utilise un organe de réglage sous vide.

3) Dispositif de régulation de glissement selon la revendication 1 ou 2, caractérisé en ce que l'organe de régulation du papillon d'étranglement est également utilisé pour la régulation de la vitesse du véhicule.

Fig.1